# EUROPEAN PATENT APPLICATION

(11) **EP 4 622 246 A1**
(43) Date of publication of application: **24.09.2025**
(21) Application number: 23891406.3
(22) Date of filing: 06.11.2023
(51) Int. Cl.: H04N 5/66, G09G 5/00

(54) **DISPLAY DEVICE, CONTROLLER, AND SYSTEM**

(30) Priority: 14.11.2022 JP 2022181702
(71) Applicant: Sony Semiconductor Solutions Corporation, Atsugi-shi, Kanagawa 243-0014 (JP); Sony Group Corporation, Tokyo 108-0075 (JP)
(72) Inventor: YASUNAGA, Hiroaki, Atsugi-shi, Kanagawa 243-0014 (JP); OKAMOTO, Eizo, Tokyo 108-0075 (JP); TAKAMIYA, Koji, Tokyo 108-0075 (JP); EMA, Hirotomo, Atsugi-shi, Kanagawa 243-0014 (JP)
(74) Representative: 2SPL Patentanwälte PartG mbB
(86) International application number: PCT/JP2023/039928
(87) International publication number: WO 2024/106254

(57) **Abstract**

A display device is a display device daisy-chained in a display chain configuring at least a part of a tiling display, the display device including a display unit that displays, based on a video signal of a chain video supplied to the display chain and displayed by the display chain, a video corresponding to the own display device in the display chain, a first interface unit for acquiring a first video signal including a video signal of a part of the chain video from one end side of the display chain, a second interface unit for acquiring a second video signal including a video signal of a remainder of the chain video from another end side of the display chain, and a display processing unit that causes the display unit to display the corresponding video based on at least one of the first video signal and the second video signal.

## Description

### Field

The present disclosure relates to a display device, a controller, and a system.

### Background

For example, as known in Patent Literature 1, in a tiling display, a plurality of display devices respectively including displays are daisy-chained. When a controller supplies the video signal to a display chain, a video signal is input to the display devices and a video based on the video signal is displayed.

### Citation List

### Patent Literature

Patent Literature 1: JP 2017-207580 A

### Summary

### Technical Problem

When a failure such as disconnection occurs in the display chain, the video signal does not reach the display devices at stages after the disconnection. Patent Literature 1 proposes a method in which a controller switches a transmission direction of a video signal when receiving a failure notification from a display device. It is likely that video display is interrupted for reasons such as time required for the switching by the controller.

An aspect of the present disclosure suppresses interruption of video display.

### Solution to Problem

A display device according to one aspect of the present disclosure is daisy-chained in a display chain configuring at least a part of a tiling display, the display device comprising: a display unit that displays, based on a video signal of a chain video supplied to the display chain and displayed by the display chain, a video corresponding to the own display device in the display chain; a first interface unit for acquiring a first video signal including a video signal of a part of the chain video from one end side of the display chain; a second interface unit for acquiring a second video signal including a video signal of a remainder of the chain video from another end side of the display chain; and a display processing unit that causes the display unit to display the corresponding video based on at least one of the first video signal and the second video signal.

A controller according to one aspect of the present disclosure supplies a video signal to a display chain including a daisy-chained plurality of display devices and configuring at least a portion of a tiling display, the controller comprising: a first interface unit connected to one end of the display chain and for supplying a first video signal including a video signal of a part of a chain video displayed by the display chain; and a second interface unit connected to another end of the display chain and for supplying a second video signal including a video signal of a remainder of the chain video.

A system according to one aspect of the present disclosure comprises a first controller and a second controller that provide video signals to a display chain including a daisy-chained plurality of display devices and configuring at least a part of a tiling display, wherein the first controller includes a first interface unit connected to one end of the display chain and for supplying a first video signal including a video signal of a part of a chain video displayed by the display chain, and the second controller includes a second interface unit connected to another end of the display chain and for supplying a second video signal including a video signal of a remainder of the chain video to another end of the display chain.

### Brief Description of Drawings

FIG. 1 is a diagram illustrating an example of a schematic configuration of a system according to an embodiment.
FIG. 2 is a diagram illustrating an example of a schematic configuration of the system according to the embodiment.
FIG. 3 is a diagram illustrating an example of a schematic configuration of a display device.
FIG. 4 is a diagram illustrating an example of a display video.
FIG. 5 is a diagram illustrating an example of a schematic configuration of the system.
FIG. 6 is a diagram illustrating an example of a display video.
FIG. 7 is a diagram illustrating an example of a display video.
FIG. 8 is a diagram illustrating an example of a display video.
FIG. 9 is a diagram illustrating an example of a schematic configuration of the display device.
FIG. 10 is a diagram illustrating an example of a schematic configuration of the display device.
FIG. 11 is a diagram illustrating an example of a change of a video signal.
FIG. 12 is a diagram illustrating an example of a change of a video signal.
FIG. 13 is a diagram illustrating an example of a change of a video signal.

### Description of Embodiments

An embodiment of the present disclosure is explained in detail below with reference to the drawings. Note that, in the embodiment explained below, redundant explanation is omitted by denoting the same elements with the same reference numerals and signs.

The present disclosure is explained according to order of items described below.
0. Introduction
1. Embodiment
2. Modifications
3. Example of effects

### 0. Introduction

A tiling display includes a plurality of display devices each corresponding to one tile portion. The display devices display a video based on a video signal supplied from a controller. In order to supply a video signal to a large number of display devices with one controller, a configuration in which a plurality of display devices are chain-connected (cascade-connected) is generally used. This configuration is also referred to as display chain. The controller supplies, for example, a video signal to one end of the display chain. When a failure such as disconnection occurs in the display chain, the video signal does not reach the display devices at stages after the disconnection, and the corresponding display devices cannot display a video.

Patent Literature 1 discloses a method in which a controller having received a failure notification from a display device supplies a video signal to the other end of a display chain to switch a transmission direction of the video signal. However, in the method of Patent Literature 1, since the controller receives the failure notification from the display device and changes the transmission direction of the video signal, it is likely that a delay occurs from the failure to display recovery and video display is interrupted. In the case of bidirectional communication in which transmission and reception are separated, twice a band of unidirectional communication is required to cope with a change in the transmission direction.

For example, at least some of the problems described above are addressed by the disclosed technology. As explained in detail below, for example, half of the video signal is supplied (supplied in the forward direction) to one end of the display chain and the remainder is supplied (supplied in the reverse direction) to the other end of the display chain. The display device displays a video based on those two video signals when a failure does not occur and, when a failure occurs, displays, based on only one video signal, a video by complementing a video based on, for example, one video signal based on the other video signal. Since intervention of the controller is not required, it is possible to suppress the disconnection of the video display. Even in a unidirectional video signal transmission path, redundancy can be achieved without increasing a band. Cost reduction possibility is higher than when a bidirectional transmission path is used.

### 1. Embodiment

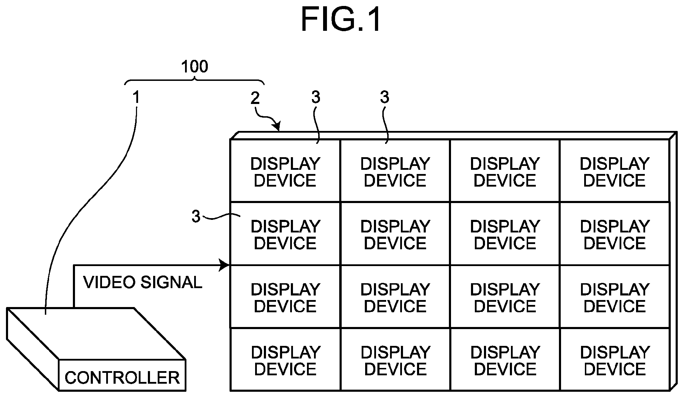

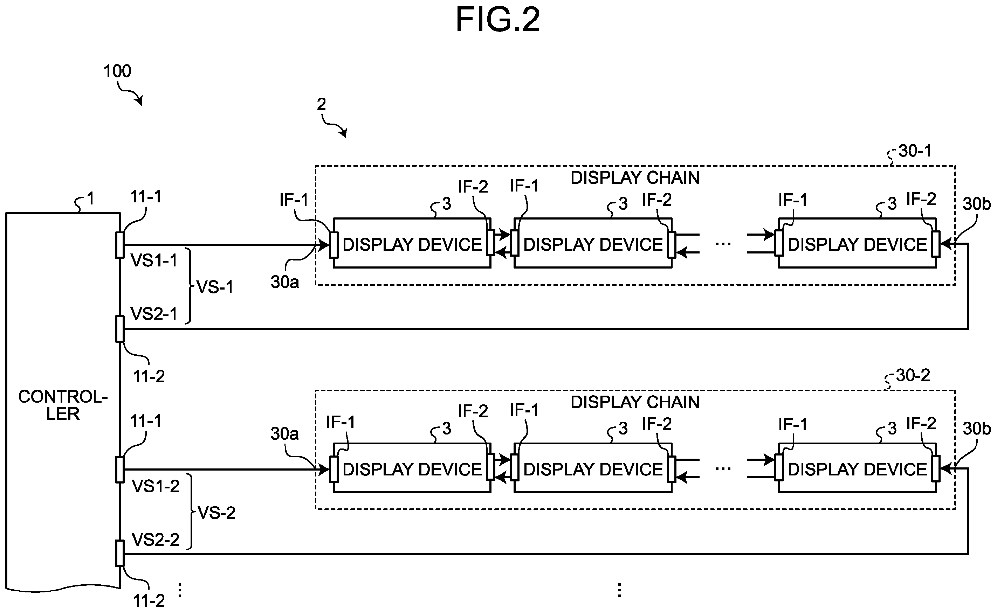

FIG. 1 and FIG. 2 are diagrams illustrating an example of a schematic configuration of a system according to an embodiment. A system 100 is a system (for example, a display system) configured to display a video and includes a controller 1 and a tiling display 2. The controller 1 and the tiling display 2 are configured to be communicable with each other such that at least data can be transmitted from the controller 1 to the tiling display 2. An example of the data is a video signal and, for example, a video transmission cable is used for the transmission. An example of the video transmission cable is a LAN cable or the like. For example, a full-duplex communication system such as 10GBASE-T Ethernet (registered trademark) may be used.

The controller 1 controls the tiling display 2. An example of the control is control of video display by the tiling display 2, and, more specifically, includes supply (transmission) of a video signal from the controller 1 to the tiling display 2. The controller 1 includes, for example, a processor, a storage device, and the like not illustrated in the figures and is designed to implement functions of the controller 1 explained below. The design may be software design or may be hardware design.

The tiling display 2 includes a plurality of display devices 3 disposed in a tile shape. One display device 3 includes a display unit equivalent to one tile in the tiling display 2 and peripheral elements such as components and members relating to the display. Such a display device 3 is also referred to as cabinet or the like. The plurality of display devices 3 can display one video as a whole in cooperation with one another.

As illustrated in FIG. 2, the tiling display 2 includes at least one display chain 30. In the example illustrated in FIG. 2, the tiling display 2 includes a plurality of display chains 30, two display chains 30 among the plurality of display chains 30 are added with signs like display chain 30-1 and display chain 30-2. When not particularly distinguished, the display chains 30-1 and 30-2 are simply referred to as display chain 30. The same applies to other elements distinguished by signs.

The display chain 30 includes a daisy-chained plurality of display devices 3. In other words, the display devices 3 are daisy-chained in the display chain 30 and used. When the tiling display 2 includes only one display chain 30, the number of display devices 3 included in the tiling display 2 and the number of display devices 3 included in the display chain 30 are the same. The daisy chain-connection is also referred to as cascade connection or the like.

One end of the display chain 30 is referred to and illustrated as one end 30a. The other end of the display chain 30 is referred to and illustrated as the other end 30b. In a range without contradiction, the one end 30a of the display chain 30 may be understood as indicating the display device 3 located closest to the one end 30a side in the display chain 30. The other end 30b of the display chain 30 may be understood as indicating the display device 3 located closest to the other end 30b in the display chain 30.

The controller 1 supplies a video signal of a video displayed by the display chain 30 to the display chain 30. The video signal supplied to the display chain 30 is referred to and illustrated as video signal VS in the drawing. The video displayed based on the video signal VS by the display chain 30 is also referred to as "chain video".

The video signals VS supplied to the display chain 30-1 and the display chain 30-2 are referred to and illustrated as video signal VS-1 and video signal VS-2 such that the video signals VS can be distinguished.

The video signal VS includes a video signal VS1 and a video signal VS2. The video signal VS1 is a first video signal including a video signal of a part (for example, half) of the chain video of the display chain 30. The video signal VS2 is a second video signal including a video signal of the remainder (for example, the remaining half) of the chain video of the display chain 30.

In one embodiment, the video signal VS1 may include a video signal of one of an odd number line and an even number line of the chain video. The video signal VS2 may include a video signal of the other line. A line direction is equivalent to, for example, the lateral direction (the horizontal direction) of the display device 3. In the following explanation, it is assumed that the video signal VS1 includes a video signal of the odd number line and the video signal VS2 includes a video signal of the even number line unless particularly explained otherwise.

The controller 1 supplies the video signal VS1 to the one end 30a of the display chain 30. The video signal VS1 is input to the display device 3 located closest to the one end 30a and is transmitted to the display device 3 at a post stage (the other end 30b side) via the display device 3. The input and the transmission are repeated and the video signal VS1 is input to the display devices 3 daisy-chained between the one end 30a and the other end 30b of the display chain 30.

The controller 1 supplies the video signal VS2 to the other end 30b of the display chain 30. The video signal VS2 is input to the display device 3 located closest to the other end 30b and is transmitted to the display device 3 at a post stage (the one end 30a side) via the display device 3. The input and the transmission are repeated and the video signal VS2 is input to the display devices 3 daisy-chained between the other end 30b and the one end 30a of the display chain 30.

The controller 1 includes an interface unit 11 (FIG. 2). The interface unit 11 may include a port to which the video transmission cable is connected in the controller 1. When the video transmission cable is a LAN cable, the port is a LAN port and the interface unit 11 provides, for example, an interface conforming to the RJ45 standard.

The interface unit 11 includes an interface unit 11-1 and an interface unit 11-2. The interface unit 11-1 is connected to the one end 30a of the display chain 30 (via the video transmission cable) and is used to supply the video signal VS1. The interface unit 11-2 is connected to the other end 30b of the display chain 30 (via the video transmission cable) and is used to supply the video signal VS2. Note that, as explained in detail below, the display devices 3 also include interfaces unit to which the video transmission cable is connected. In FIG. 2, the interface units are added with a sign and illustrated as interface units IF.

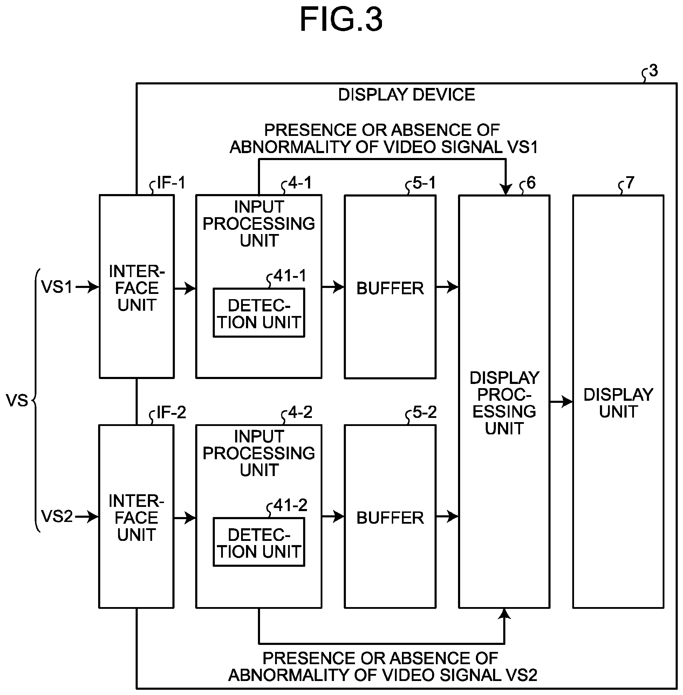

The display chain 30 displays a chain video based on the video signal VS supplied from the controller 1. Specifically, the display devices 3 in the display chain 30 display a video corresponding to (the positions of) the own display devices in the display chain 30 based on the video signal VS supplied to the display chain 30. Explanation is made with reference to FIG. 3 as well.

FIG. 3 is a diagram illustrating an example of a schematic configuration of the display device. The display device 3 includes an interface unit IF, an input processing unit 4, a buffer 5, a display processing unit 6, and a display unit 7. Portions of the input processing unit 4, the buffer 5, and the display processing unit 6 in the display device 3 include, for example, a processor, a storage device, and the like not illustrated in the figure and are designed to implement various functions explained below. The design may be software design or may be hardware design. As explained above, the video signal VS, more specifically, the video signal VS1 and the video signal VS2 are input to the display device 3.

The interface unit IF is used to acquire the video signal VS input to the display device 3. The interface unit IF includes a port to which a transmission cable of the video signal VS is connected in the display device 3. When the video transmission cable is a LAN cable, the port is a LAN port and the interface unit IF provides, for example, an interface conforming to the RJ45 standard.

The interface unit IF includes an interface unit IF-1 and an interface unit IF-2. The interface unit IF-1 is used to acquire the video signal VS1 from the one end 30a side of the display chain 30 (FIG. 1). The interface unit IF-2 is used to acquire the video signal VS2 from the other end 30b side of the display chain 30.

For example, when the video transmission cable supports unidirectional transmission, the display device 3 is connected to each of the display devices 3 in the front and the rear via two video transmission cables. The interface unit IF of the display device 3 is configured such that four video transmission cables in total are connected to the interface unit IF. When the video transmission cable supports bidirectional transmission, the display device 3 is connected to each of the display devices 3 in the front and the rear via one video transmission cable. The interface unit IF of the display device 3 is configured such that two video transmission cables in total are connected to the interface unit IF.

The input processing unit 4 processes the video signal VS acquired by the interface unit IF. The input processing unit 4 includes an input processing unit 4-1 and an input processing unit 4-2. The input processing unit 4-1 processes the video signal VS1. The input processing unit 4-2 processes the video signal VS2. Note that the acquisition of the video signal VS by the interface unit IF and the input of the video signal VS to the display device 3 are understood as the same meaning in a range without contradiction and the acquisition and the input may be replaced as appropriate.

The input processing unit 4 includes a detection unit 41. The detection unit 41 detects an abnormality of the video signal VS. The detection unit 41 of the input processing unit 4-1 is referred to and illustrated as detection unit 41-1. The detection unit 41 of the input processing unit 4-2 is referred to and illustrated as detection unit 41-2. The detection unit 41-1 detects an abnormality (for example, no input) of the video signal VS1. The detection unit 41-2 detects an abnormality (for example, no input) of the video signal VS2.

A method of abnormality detection by the detection unit 41 is not particularly limited. Various publicly-known methods capable of detecting an abnormality of a general video signal may be used. For example, when there is no input of the video signal VS1, the detection unit 41-1 may determine that the video signal VS1 has an abnormality and detect the abnormality of the video signal VS1. When signal intensity of the video signal VS1 is considerably low (for example, lower than a predetermined threshold), the detection unit 41-1 may determine that the video signal VS1 has an abnormality and detect the abnormality of the video signal VS1. Similarly, the detection unit 41-2 may detect an abnormality of video signal VS2 when the video signal VS2 is not input. When signal intensity of video signal VS2 is considerably low, the detection unit 41-2 may detect an abnormality of video signal VS2.

Note that the abnormality of the video signal VS1 and the video signal VS2 explained above can be caused by a failure in the display chain 30. An example of the failure is disconnection or the like. In the display device 3 located closer to the other end 30b side (FIG. 2) of the display chain 30 than an abnormality occurrence part (a failure part), an abnormality of the video signal VS1 is detected. In the display device 3 located closer to the one end 30a side of the display chain 30 than the abnormality occurrence part, an abnormality of the video signal VS2 is detected.

A detection result of the detection unit 41-1 and a detection result of the detection unit 41-2 are sent (notified) to the display unit 7.

Note that the video signal VS1 and the video signal VS2 input to the display device 3 are not only processed by the input processing unit 4-1 and the input processing unit 4-2 but also transmitted to the display device 3 at a post stage. The display device 3 may also include a functional block (for example, an output processing unit) having such a transmission function.

The buffer 5 temporarily stores (retains) the video signal VS acquired by the interface unit IF. The buffer 5 includes a buffer 5-1 and a buffer 5-2. The buffer 5-1 stores the video signal VS1. The buffer 5-2 stores the video signal VS2. The video signal VS is read from the buffer 5 according to video display timing.

The display processing unit 6 and the display unit 7 are explained together. The display processing unit 6 performs display processing based on a processing result of the input processing unit 4, more specifically, a detection result of the detection unit 41 and the video signal VS acquired by the interface unit IF, more specifically, the video signal VS stored in the buffer 5. The display unit 7 displays a video corresponding to (the position of) the own display device in the display chain 30 according to the display processing of the display processing unit 6. Unless particularly explained otherwise, operations of the display unit 7 explained below may be understood as being performed under the display processing of the display processing unit 6.

As explained above, the display unit 7 is a display equivalent to one tile in the tiling display 2. An example of the display unit 7 is an LED (Light Emitting Diode) display. Not only the LED but also various publicly-known displays may be used.

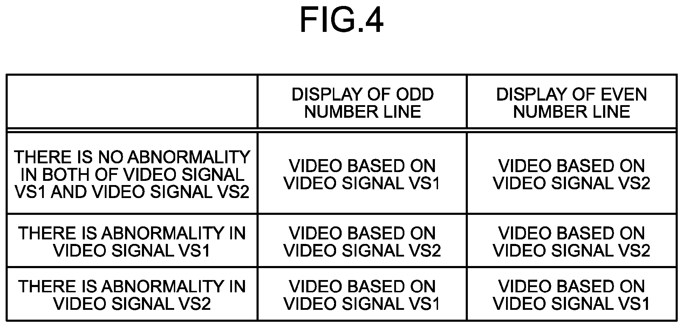

The display by the display unit 7 is controlled by the display processing unit 6. The display processing unit 6 causes the display unit 7 to display a video corresponding to the own display device based on at least one of the video signal VS1 and the video signal VS2. Explanation is made with reference to FIG. 4 as well.

FIG. 4 is a diagram illustrating an example of a display video. When there is no abnormality in both of the video signal VS1 and the video signal VS2, the display processing unit 6 causes the display unit 7 to display a video based on both of the video signal VS1 and the video signal VS2. In this example, a video based on the video signal VS1 is displayed on the odd number line and a video based on the video signal VS2 is displayed on the even number line.

When there is an abnormality in one of the video signal VS1 and the video signal VS2, the display processing unit 6 does not use the one video signal having the abnormality and causes the display unit 7 to display a video based on the other video signal having no abnormality. That is, the display processing unit 6 causes, among pixels of the display unit 7, pixels, which should display the video based on one video signal having the abnormality of the video signal VS1 and the video signal VS2, to display the video based on the other video signal having no abnormality.

Specifically, when there is an abnormality in the video signal VS1, the display processing unit 6 causes the display unit 7 to display a video based on the video signal VS2. In this example, the video based on the video signal VS2 is displayed on both of the odd number line and the even number line. For example, pixel values of corresponding (adjacent) pixels in the two lines are set to be the same. The same video based on the same video signal VS2 is displayed on two of the odd number line and the even number line adjacent to each other.

When there is an abnormality in the video signal VS2, the display processing unit 6 causes the display unit 7 to display a video based on the video signal VS1. In this example, the video based on the video signal VS1 is displayed on both of the odd number line and the even number line. For example, pixel values of corresponding (adjacent) pixels in the two lines are set to be the same. The same video based on the same video signal VS1 is displayed on the two lines of the odd number line and the even number line adjacent to each other.

In the system 100 explained above, the video signal VS1 is supplied to the one end 30a of the display chain 30 and the video signal VS2 is supplied to the other end 30b of the display chain 30. When there is an abnormality in one of the video signal VS1 and the video signal VS2, the display device 3 displays a video based on the other video signal having no abnormality. For example, since the intervention of the controller in Patent Literature 1 is not required, it is possible to suppress interruption of video display. Even in a unidirectional video signal transmission path, redundancy can be achieved without increasing a band. Cost reduction possibility is higher than when a bidirectional transmission path is used.

As explained above, the full-duplex communication scheme such as 10GBASE-T Ethernet may be used for video transmission. Even in this case, compared with when the transmission direction of the same video (simple backup) in Patent Document 1, there is still an advantage that a band can be halved (or a video with a double bit rate can be transmitted) by transmitting halved videos (divided video signals) from both sides. Even when a video signal is transmitted by full duplex communication, only one direction is used in the method of the related art and an effective band is doubled because both directions are used in this scheme. Since not only the unidirectional transmission scheme but also the full duplex communication scheme can secure a double effective band compared with the technique of Patent Literature 1, there are advantages that, for example, a video can be transmitted to a larger number of display devices 3 and a higher quality image can be transmitted.

### 2. Modifications

Disclosed techniques are not limited to the embodiment explained above. Some modifications are explained.

### <First modification>

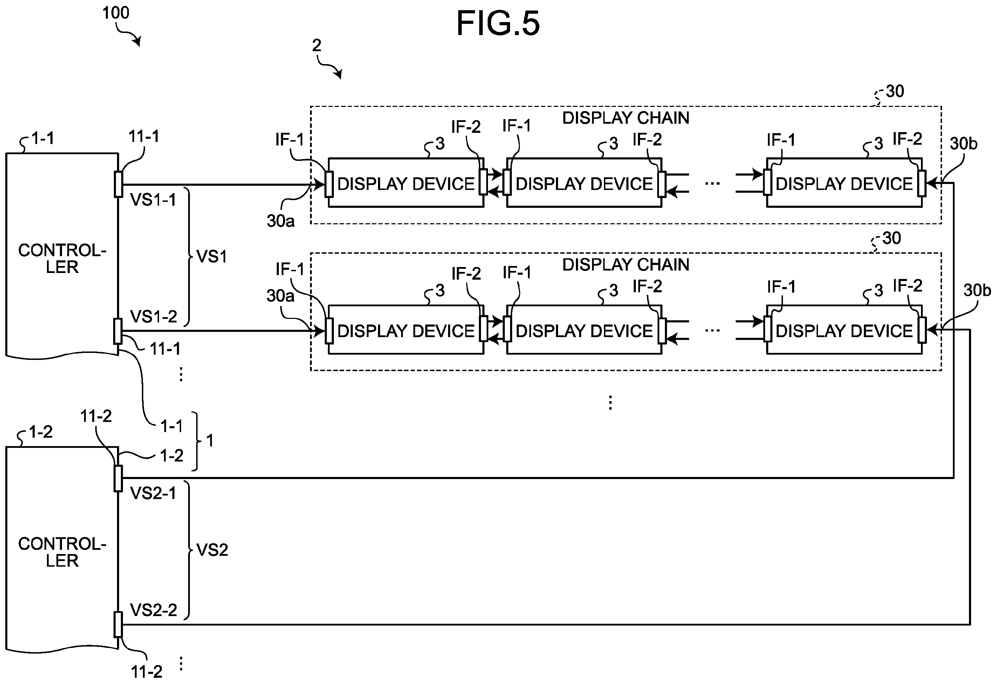

In one embodiment, the system 100 may include a plurality of controllers. By making the controllers redundant, even when a failure occurs in a part of controllers, it is possible to suppress interruption of video display. This is explained with reference to FIG. 5.

FIG. 5 is a diagram illustrating an example of a schematic configuration of the system. In this example, the system 100 includes a controller 1-1 and a controller 1-2.

Of the controller 1-1 and the controller 1-2, the controller 1-1 includes the interface unit 11-1. The controller 1-1 is a first controller that supplies the video signal VS1 to the one end 30a of the display chain 30. Of the controller 1-1 and the controller 1-2, the controller 1-2 includes the interface unit 11-2. The controller 1-2 is a second controller that supplies the video signal VS2 to the other end 30b of the display chain 30.

Since the operation of the display device 3 in the display chain 30 is as described above, explanation of the operation is omitted. Even if the controller 1-1 breaks down and the video signal VS1 is no longer supplied to display chain 30, the display devices 3 display a video based on video signal VS2. Conversely, even if controller 1-2 breaks down and video signal VS2 is no longer supplied to display chain 30, the display devices 3 display a video based on the video signal VS1. Therefore, even if one of controller 1-1 and controller 1-2 breaks down, video display can be prevented from being interrupted.

An output band (a signal frequency band) of the controllers made redundant, that is, each of the controller 1-1 and the controller 1-2 is half of an output band of one controller before the redundancy and the number of display devices 3 that can be connected is doubled. If the number of controllers before the redundancy is two or more, redundancy can be achieved without increasing the number of controllers.

### <Second modification>

In the embodiment explained above, the case in which the video signal VS is divided into the video signal of the odd number line and the video signal of the even number line and one is the video signal VS1 and the other is the video signal VS2 is explained as an example. However, other video signals VS can be divided.

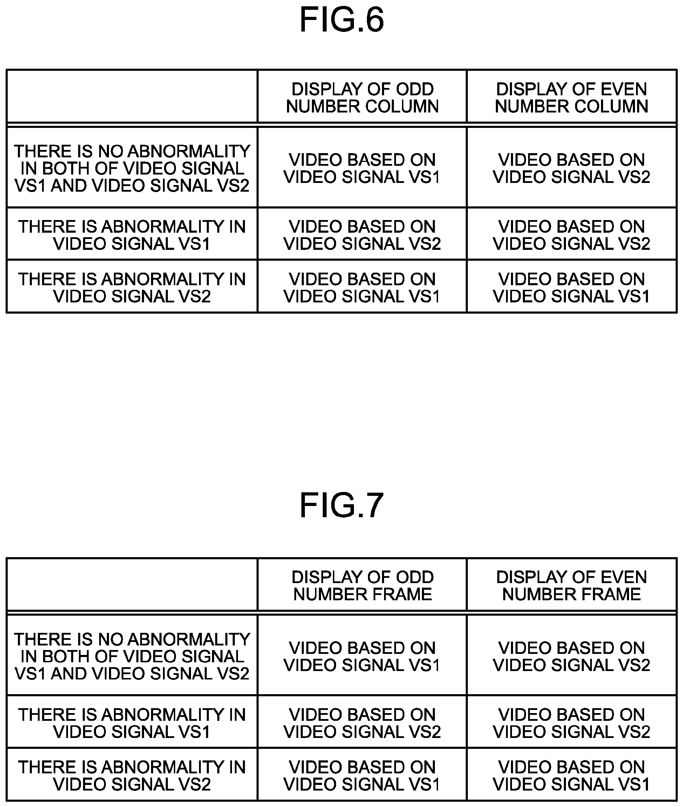

For example, the video signal VS1 may include a video signal of one column of an odd number column and an even number column of a chain video. The video signal VS2 may include a video signal of the other column. A column direction corresponds to, for example, the longitudinal direction (the vertical direction) of the display device 3. Explanation is made with reference to FIG. 6 as well.

FIG. 6 is a diagram illustrating an example of a display video. In this example, the video signal VS1 includes a video signal of an odd number column and the video signal VS2 includes a video signal of an even number column. When there is no abnormality in both of the video signal VS1 and the video signal VS2, a video based on the video signal VS1 is displayed on the odd number column and a video based on the video signal VS2 is displayed on the even number column. When there is an abnormality in the video signal VS1, the video based on the video signal VS2 is displayed on both of the odd number column and the even number column. When there is an abnormality in the video signal VS2, the video based on the video signal VS1 is displayed on both of the odd number column and the even number column.

Alternatively, the video signal VS1 may include a video signal of one frame of an odd number frame and an even number frame of a chain video. The video signal VS2 may include a video signal of the other frame. The odd number frame and the even number frame are equivalent to videos (images) of one frame alternately displayed on a time axis. Explanation is made with reference to FIG. 7 as well.

FIG. 7 is a diagram illustrating an example of a display video. In this example, the video signal VS1 includes a video signal of the odd number frame and the video signal VS2 includes a video signal of the even number frame. When there is no abnormality in both of the video signal VS1 and the video signal VS2, a video based on the video signal VS1 is displayed on the odd number frame and a video based on the video signal VS2 is displayed on the even number frame. When there is an abnormality in the video signal VS1, the video based on the video signal VS2 is displayed on both of the odd number frame and the even number frame. When there is an abnormality in the video signal VS2, the video based on the video signal VS1 is displayed on both the odd number frame and the even number frame.

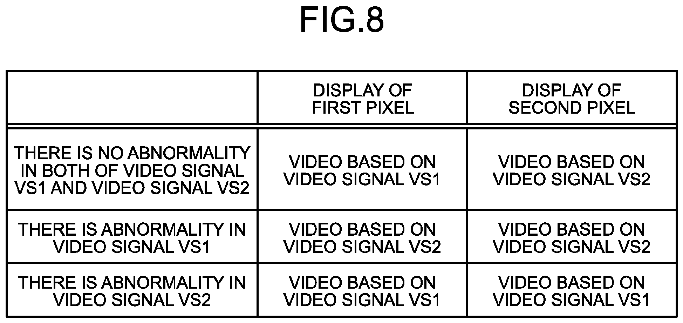

For example, the video signal VS1 may include a video signal of one pixels of first pixels and second pixels alternately located in each of the row direction and the column direction of the display unit 7. The video signal VS2 may include a video signal of the other pixels of the first pixels and the second pixels alternately located in each of the row direction and the column direction of the display unit 7. It can also be said that the first pixels and the second pixels are located in a checkered pattern. For example, the first pixels display a video in a checkered pattern and the second pixels display a video in an inverted checkered pattern. Explanation is made with reference to FIG. 8 as well.

FIG. 8 is a diagram illustrating an example of a display video. In this example, the video signal VS1 includes a video signal of the first pixels and the video signal VS2 includes a video signal of the second pixels. When there is no abnormality in both of the video signal VS1 and the video signal VS2, a video based on the video signal VS1 is displayed on the first pixels and a video based on the video signal VS2 is displayed on the second pixels. When there is an abnormality in the video signal VS1, the video based on the video signal VS2 is displayed on both of the first pixels and the second pixels. When there is an abnormality in the video signal VS2, the video based on the video signal VS1 is displayed on both of the first pixels and the second pixels.

For example, also when the video signal VS1 and the video signal VS2 explained above are used, it is possible to suppress interruption of video display. Possibility of flexible design adjusted to a system configuration and the like of the system 100 increases.

### <Third modification>

In one embodiment, the display processing unit 6 may complement (pixel complementation), among the pixels of the display unit 7, pixels, which should display a video based on one video signal having an abnormality of the video signal VS1 and the video signal VS2, with a pixel value of the other video signal having no abnormality. As an example, a case in which the video signal VS1 includes a video signal of an odd number line and the video signal VS2 includes a video signal of an even number line is explained.

When there is an abnormality in the video signal VS1, a pixel value of pixels (pixels of the odd number line) on which the video signal VS1 should be displayed is complemented with a pixel value of pixels (pixels of the even number line) on which a video based on the video signal VS2 should be displayed. For example, the pixel value of the pixels of the odd number line is set to an average value of pixel values of the even number lines on both sides the odd number line. Note that, when there are pixels of the even number line only on one side of the odd number line, a pixel value of the pixels of the odd number line may be set to, for example, the same value as a pixel value of the even number line.

When there is an abnormality in the video signal VS2, a pixel value of pixels (pixels of the even number line) on which the video signal VS2 should be displayed is complemented with a pixel value of pixels (pixels of the odd number line) on which the video based on the video signal VS1 should be displayed. For example, a pixel value of the pixels of the even number line is set to an average value of pixel values of odd number lines on both sides of the even number line. Note that, when there are pixels of the odd number line only on one side of the even number line, a pixel value of the pixels of the even number line may be set to, for example, the same value as a pixel value of the odd number line.

When the video signal VS1 includes a video signal of the even number line and the video signal VS2 includes a video signals of the odd number line, the same explanation as the above explanation can be made. The same applies when the video signal VS1 includes a video signal of one of the odd number column and the even number column and the video signal VS2 includes a video signal of the other column. The same applies when the video signal VS1 includes a video signal of one of the odd number frame and the even number frame and the video signal VS2 includes a video signal of the other frame. The same applies when the video signal VS1 includes a video signal of one pixels of the first pixels and the second pixels (in the checkered pattern) and the video signal VS2 includes a video signal of the other pixels. In this case, it is possible to perform complementation using pixel values of the pixels on both the sides in both of the row direction and the column direction and, more specifically, it is also possible to perform complementation using pixel values of the pixels on both sides in a direction (an oblique direction) between the row direction and the column direction. Accordingly, an effect of pixel complementation can be further enhanced.

By performing the pixel complementation, for example, the quality of a video (image quality) can be further improved than when a pixel value of other pixels is used as it is without performing the pixel complementation.

### <Fourth modification>

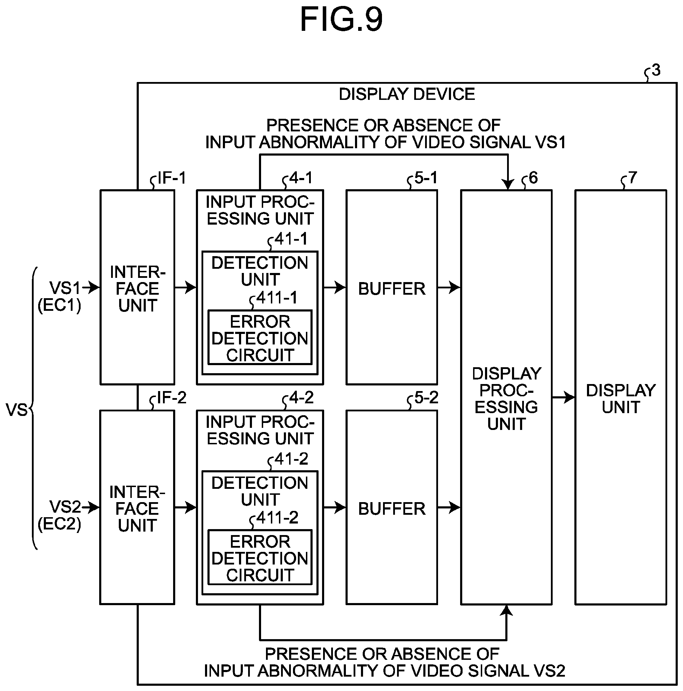

In one embodiment, the video signal VS supplied to the display chain 30 by the controller 1 may include an error detection code. Abnormality detection for the video signal VS by the detection unit 41 of the input processing unit 4 may be performed using the error detection code included in the video signal VS. This is explained with reference to FIG. 9.

FIG. 9 is a diagram illustrating an example of a schematic configuration of a display device. Each of the video signal VS1 and the video signal VS2 supplied to the display device 3 includes an error detection code. The error detection code included in the video signal VS1 is referred to as error detection code EC1. The error detection code included in the video signal VS2 is referred to as error detection code EC2.

The detection unit 41 of the input processing unit 4 of the display device 3 includes an error detection circuit 411. The error detection circuit 411 of the detection unit 41-1 is referred to and illustrated as error detection circuit 411-1. The error detection circuit 411 of the input processing unit 4-2 is referred to and illustrated as error detection circuit 411-2.

The error detection circuit 411-1 detects an abnormality of the video signal VS1 based on the error detection code EC1 included in the video signal VS1. For example, when a large number of code errors that cannot be subjected to code correction are found, it is determined that the video signal VS1 has an abnormality. The abnormality of the video signal VS1 is detected.

The error detection circuit 411-2 detects an abnormality of the video signal VS1 based on the error detection code EC2 included in the video signal VS2. For example, when a large number of code errors that cannot be subjected to code correction are found, it is determined that the video signal VS2 has an abnormality. The abnormality of the video signal VS2 is detected.

For example, abnormalities of the video signal VS1 and the video signal VS2 can be detected using the error detection circuit 411-1 and the error detection circuit 411-2 explained above. Even when another abnormality detection means is not prepared on the outside (for example, a video transmission cable or the like) of the display device 3, it is possible to detect abnormalities of the video signal VS1 and the video signal VS2 and suppress interruption of video display as explained above.

### <Fifth modification>

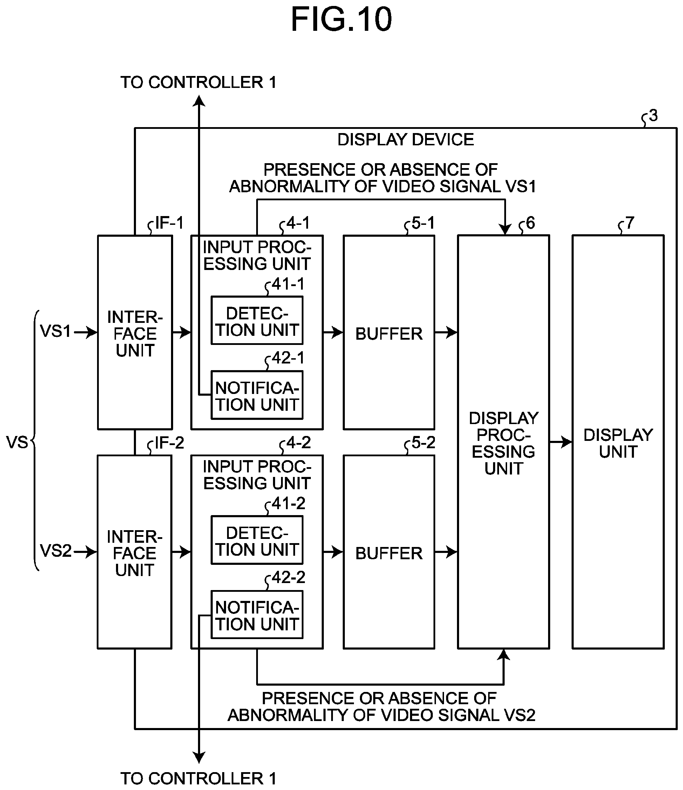

In one embodiment, information concerning presence or absence of an abnormality of each of the video signal VS1 and the video signal VS2, for example, a result of abnormality detection for the video signal VS explained below may be notified from at least one display device 3 among the plurality of display devices 3 included in the display chain 30 to the controller 1. The controller 1 may receive the notification from the display device 3, specify an abnormality occurrence part in the display chain 30 based on the received notification and change the video signal VS1 and the video signal VS2 based on a specification result. This is explained with reference to FIG. 10 to FIG. 13.

FIG. 10 is a diagram illustrating an example of a schematic configuration of a display device. The input processing unit 4 of the display device 3 includes a notification unit 42. The notification unit 42 of the input processing unit 4-1 is referred to and illustrated as notification unit 42-1. The notification unit 42 of the input processing unit 4-2 is referred to and illustrated as notification unit 42-2.

The notification unit 42-1 notifies a detection result of the detection unit 41-1, more specifically, presence or absence of an abnormality of the video signal VS1 to the controller 1. The notification unit 42-2 notifies a detection result of the detection unit 41-2, more specifically, presence or absence of an abnormality of the video signal VS2 to the controller 1.

For the notification to the controller 1 by the notification unit 42, for example, a transmission path (a video transmission cable) for the video signal VS may be used. In that case, for example, in the display devices 3, a signal indicating the detection result of the detection unit 41 may be superimposed on the video signal VS and transmitted to the display device 3 at the last stage and may be transmitted from the display device 3 at the last stage to the controller 1. A communication line (for example, a communication line having lower speed than the video transmission cable) provided separately from the video transmission cable may be used for the notification to the controller 1 by the notification unit 42.

The controller 1 specifies an abnormality occurrence part in the display chain 30 based on the notification from the notification unit 42 of the display device 3. In the following explanation, it is assumed that the abnormality occurrence part is a disconnection part.

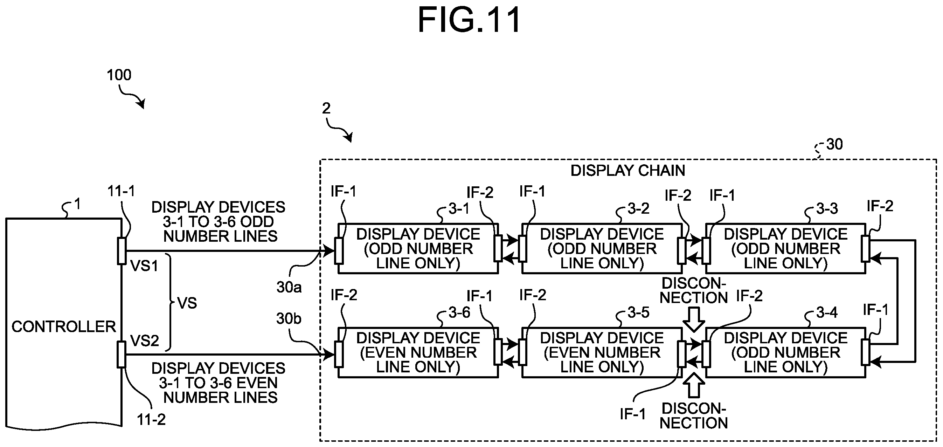

FIG. 11 to FIG. 13 are diagrams illustrating examples of a change of a video signal. Six display devices 3 configuring the display chain 30 are exemplified. The display devices 3 are referred to and illustrated as display device 3-1 to display device 3-6 to be able to be distinguished. The display device 3-1 to the display device 3-6 are daisy-chained in this order between the one end 30a and the other end 30b of the display chain 30.

As illustrated in FIG. 11, initially, the video signal VS1 includes a video signal of an odd number line of a chain video, that is, a video signal of an odd number line of a video displayed by each of display device 3-1 to display device 3-6. The video signal VS2 includes a video signal of an even number line of a chain video, that is, a video signal of an even number line of a video displayed by each of the display device 3-1 to the display device 3-6.

As indicated by a white arrow, in this example, disconnection has occurred between the display device 3-4 and the display device 3-5. Only the video signal VS1 (the video signal of the odd number lines) of the video signal VS1 and the video signal VS2 is input to the display device 3-1 to the display device 3-4. Only the video signal VS2 (the video signal of even number lines) of the video signal VS1 and the video signal VS2 is input to the display device 3-5 and the display device 3-6. The display device 3-1 to the display device 3-4 display a video based on the video signal VS1. The display device 3-5 and the display device 3-6 display a video based on the video signal VS2.

Each of the display device 3-1 to the display device 3-6 notifies abnormalities of the video signal VS1 and the video signal VS2 to the controller 1. The controller 1 specifies an abnormality occurrence part based on the notification from each of the display device 3-1 to the display device 3-6. For example, the display device 3-1 to the display device 3-4 notify the controller 1 that there is the abnormality in the video signal VS2. The display device 3-5 and the display device 3-6 notify the controller 1 that there is the abnormality in the video signal VS1. From these notifications, it is grasped that there is an abnormality in transmission of the video signal VS1 from the display device 3-4 to the display device 3-5 and there is an abnormality in transmission of the video signal VS2 from the display device 3-5 to the display device 3-4. Thus, the controller 1 specifies a part between the display device 3-4 and the display device 3-5 as an abnormality occurrence part.

When at least one display device 3 is disposed closer to the one end 30a side of the display chain 30 than the abnormality occurrence part, the controller 1 supplies, from the interface unit 11-1, a video signal for at least a part of the display devices 3 disposed closer to the one end 30a side of the display chain 30 than the abnormality occurrence part, the video signal being included in the video signal VS1 and the video signal VS2. When at least one display device 3 is disposed closer to the other end 30b side of the display chain 30 than the abnormality occurrence part, the controller 1 supplies, from the interface unit 11-2, a video signal for at least a part of the display devices 3 disposed closer to the other end 30b side of the display chain 30 than the abnormality occurrence part, the video signal being included in the video signal VS1 and the video signal VS2.

Specifically, for example, the controller 1 changes and supplies the video signal VS1 and the video signal VS2 according to the abnormality occurrence part specified based on the notification from the notification unit 42 of the display device 3. The controller 1 changes the video signal VS1 and the video signal VS2 such that a video signal for at least some of the display devices 3 located closer to the one end 30a side of the display chain 30 than a disconnection part in the video signal VS2 is included not in the video signal VS2 but in the video signal VS1. The controller 1 changes the video signal VS1 and the video signal VS2 such that a video signal for at least a part of the display devices 3 located closer to the other end 30b side of the display chain 30 than the disconnection part in the video signal VS1 is included not in the video signal VS1 but in the video signal VS2. The display device 3 acquires, in one of the interface unit IF-1 and the interface unit IF-2, a video signal corresponding to the own display device included in the video signal VS1 and the video signal VS2 before the change. The display processing unit 6 of the display device 3 causes the display unit 7 to display, based on the video signal corresponding to the own display device, a video corresponding to the video signal.

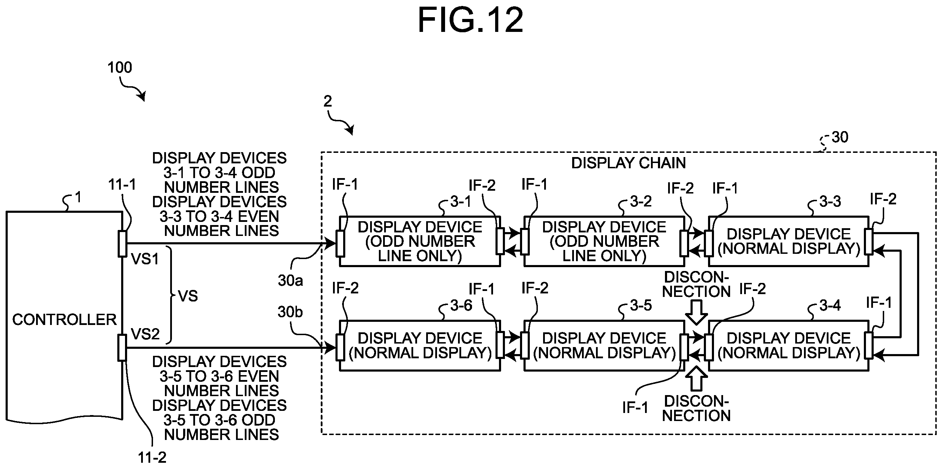

In the example illustrated in FIG. 12, the video signal VS1 and the video signal VS2 are changed such that video signals of the display device 3-3 and the display device 3-4 in the video signal VS2, that is, video signals of even number lines of the display devices 3-3 and the display devices 3-4 are included not in the video signal VS2 but in the video signal VS1. The display device 3-3 and the display device 3-4 are disposed closer to the one end 30a side of the display chain 30 than an abnormality occurrence part in the display chain 30. For that reason, in the display device 3-3 and the display device 3-4, the interface unit IF-1 of the interface unit IF-1 and the interface unit IF-2 acquires a video signal corresponding to the own display device included in the video signal VS1 and the video signal VS2 before the change. The video signal VS1 and the video signal VS2 are changed such that video signals of the display device 3-5 and the display device 3-6 in the video signal VS1, that is, video signals of odd number lines of the display device 3-5 and the display device 3-6 are included not in the video signal VS1 but in the video signal VS2. The display device 3-5 and the display device 3-6 are disposed closer to the other end 30b side of the display chain 30 than the abnormality occurrence part in the display chain 30. For that reason, in the display device 3-5 and the display device 3-6, the interface unit IF-2 of the interface unit IF-1 and the interface unit IF-2 acquires a video signal corresponding to the own display device included in the video signal VS1 and the video signal VS2 before the change.

As explained above, in the example illustrated in FIG. 12, the video signal VS1 is changed to include the video signals of the odd number lines of the display device 3-1 to the display device 3-4 and the video signals of the even number lines of the display device 3-3 and the display device 3-4. The video signal VS2 is changed to include the video signals of the even number lines of the display device 3-5 and the display device 3-6 and the video signals of the odd number lines of the display device 3-5 and the display device 3-6. The video signals of both of the odd number lines and the even number lines are input to the display device 3-3 to the display device 3-6. The display device 3-3 to the display device 3-6 return to the display (normal display) at the time when there is no abnormality in both of the video signal VS1 and the video signal VS2. Accordingly, the quality a display video (image quality) is improved.

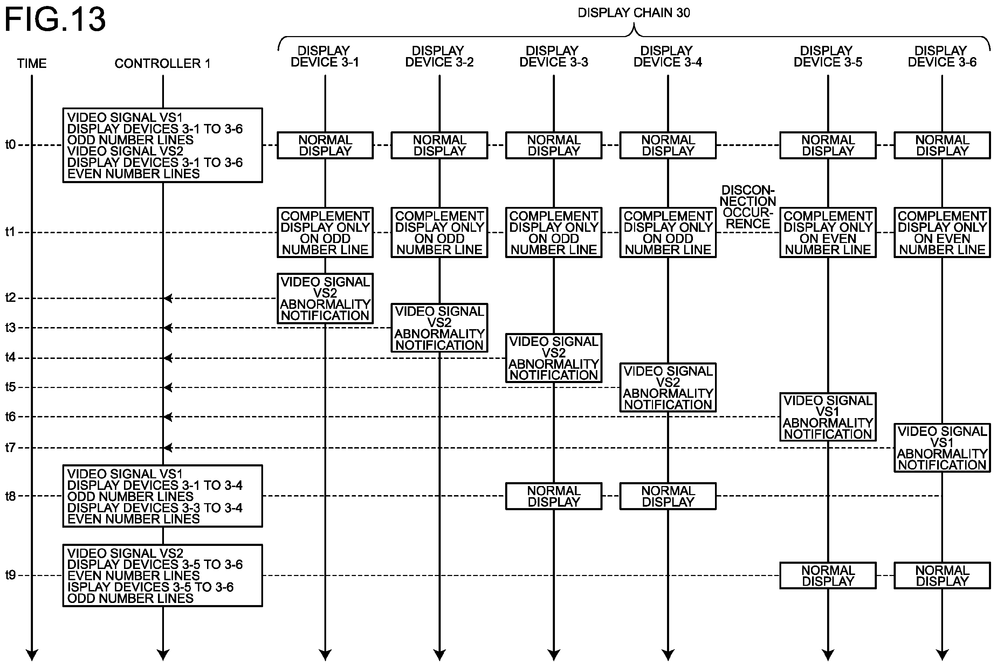

FIG. 13 illustrates an example of a timing chart. Since the specific content of the respective kinds of processing is as explained above, detailed explanation of the content is omitted as appropriate.

Time t0 indicates a state before disconnection occurs. The video signal VS1 supplied to the display chain 30 by the controller 1 includes the video signals of the odd number lines of the display device 3-1 to the display device 3-6. The video signal VS2 includes the video signals of the even number lines of the display device 3-1 to the display device 3-6. Each of the display device 3-1 to the display device 3-6 displays a video based on the video signal VS1 and the video signal VS2 (normal display).

At time t1, disconnection occurs between the display device 3-4 and the display device 3-5. Only the video signal VS1 (the video signal of the odd number lines) of the video signal VS1 and the video signal VS2 is input to the display device 3-1 to the display device 3-4. In this example, the display device 3-1 to the display device 3-4 complement the video of the even number lines with the video signal of the odd number lines and displays the video. Only the video signal VS2 (the video signal of even number lines) of the video signal VS1 and the video signal VS2 is input to the display device 3-5 and the display device 3-6. In this example, the display device 3-5 and the display device 3-6 complement the video of the even number lines with the video signal of the odd number lines and display the video.

At time t2 to time t7, an abnormality is notified from the display devices 3 to the controller 1. The display device 3-1 to the display device 3-4 notify an abnormality of the video signal VS2 to the controller 1. The display device 3-5 and the display device 3-6 notify an abnormality of the video signal VS1 to the controller 1.

At time t8 and time t9, the controller 1 changes the video signal VS1 and the video signal VS2 based on the notification from the display devices 3. In this example, at time t8, the video signal VS1 is changed to include the video signals of the odd number lines of the display device 3-1 to the display device 3-4 and the video signals of the even number lines of the display device 3-3 and the display device 3-4. The display device 3-3 and the display device 3-4 display a video based on both of the video signal of the odd number lines and the video signal of the even number lines (normal display). At time t9, the video signal VS2 is changed to include the video signals of the even number lines of the display device 3-5 and the display device 3-6 and the video signals of the odd number lines of the display device 3-5 and the display device 3-6. The display device 3-5 and the display device 3-6 display a video based on both of the video signal of the odd number line and the video signal of the even number line (normal display).

For example, when disconnection occurs as explained above, the quality of a display video of at least a part of the display devices 3 can be improved by changing the video signal VS1 and the video signal VS2 according to a disconnection part.

### 3. Example of effects

The techniques explained above are specified, for example, as explained below. One of the disclosed techniques is the display device 3. As explained with reference to FIG. 1 to FIG. 4 and the like, the display devices 3 are daisy-chained in the display chain 30 configuring at least a part of the tiling display 2. The display device 3 includes the display unit 7 that displays, based on the video signal VS of a chain video supplied to the display chain 30 and displayed by the display chain 30, a video corresponding to the position of the own display device in the display chain 30, the interface unit IF-1 (a first interface unit) for acquiring the video signal VS1 (a first video signal) including a video signal of a part of the chain video from the one end 30a side of the display chain 30, the interface unit IF-2 (a second interface unit) for acquiring the video signal VS2 (a second video signal) including a video signal of the remainder of the chain video from the other end 30b side of the display chain 30, and the display processing unit 6 that causes the display unit 7 to display, based on at least one of the video signal VS1 and the video signal VS2, a video corresponding to the video signal. For example, when there is no abnormality in both of the video signal VS1 and the video signal VS2, the display processing unit 6 may cause the display unit 7 to display a video based on both of the video signal VS1 and the video signal VS2 and, when there is an abnormality in one of the video signal VS1 and the video signal VS2, the display processing unit 6 may cause the display unit 7 to display a video based on the other video signal having no abnormality. Accordingly, it is possible to suppress interruption of video display.

As explained with reference to FIG. 1 to FIG. 4 and the like, for example, the display processing unit 6 may cause, among the pixels of the display unit 7, pixels, which should display a video based on one video signal (one of the video signal VS1 and the video signal VS2) having an abnormality, to display a video based on the other video signal (the other of the video signal VS1 and the video signal VS2) having no abnormality. Alternatively, the display processing unit 6 may complement, among the pixels of the display unit 7, pixels, which should display a video based on one video signal (one of the video signal VS1 and the video signal VS2) having an abnormality, with a pixel value of the other video signal (the other of the video signal VS1 and the video signal VS2) having no abnormality. For example, as explained above, even when there is an abnormality in one of the video signal VS1 and the video signal VS2, a video can be displayed based on the other video signal having no abnormality.

As explained with reference to FIG. 4 and FIG. 6 to FIG. 8 and the like, the video signal VS1 may include the video signal of one of the odd number line and the even number line of the chain video and the video signal VS2 may include the video signal of the other lines. The video signal VS1 may include the video signal of one column of the odd number column and the even number column of the chain video and the video signal VS2 may include the video signal of the other column. The video signal VS1 may include the video signal of one of the odd number frame and the even number frame of the chain video and the video signal VS2 may include the video signal of the other frame. The video signal VS1 may include the video signal of the chain video corresponding to one pixels of the first pixels and the second pixels alternately located in the row direction and the column direction of the display units 7 of the display devices 3 connected in the display chain 30 and the video signal VS2 may include the video signal of the chain video corresponding to the other pixels of the first pixels and the second pixels. For example, such various video signals VS1 and VS2 can be used.

As explained with reference to FIG. 9 and the like, the display device 3 may include the error detection circuit 411 (the error detection circuit 411-1 and the error detection circuit 411-2) that detects presence or absence of an abnormality of each of the video signal VS1 and the video signal VS2 based on the error detection codes (the error detection code EC1 and the error detection code EC2) included in each of the video signal VS1 and the video signal VS2. For example, as explained above, abnormalities of the video signal VS1 and the video signal VS2 can be detected.

As explained with reference to FIG. 10 to FIG. 13 and the like, the controller 1 may include the notification unit 42 (the notification unit 42-1 and the notification unit 42-2) that notifies, to the controller 1 that supplies the video signal VS to the display chain 30, presence or absence of an abnormality of each of the video signal VS1 and the video signal VS2. The display device 3 may acquire, in one of the interface unit IF-1 and the interface unit IF-2, the video signal corresponding to the own display device included in the video signal VS1 and the video signal VS2, the video signal being supplied based on the notification from the notification unit 42. The display processing unit 6 may cause the display unit 7 to display, based on the video signal corresponding to the own display device, the video corresponding to the video signal. When the own display device is disposed closer to the one end 30a side of the display chain 30 than the abnormality occurrence part in the display chain 30, the interface unit IF-1 may acquire the video signal corresponding to the own display device included in the video signal VS1 and the video signal VS2. When the own display device is disposed closer to the other end 30b side of the display chain 30 than the abnormality occurrence part in the display chain 30, the interface unit IF-2 may acquire the video signal corresponding to the own display device included in the video signal VS1 and the video signal VS2. For example, the quality of a display video of at least a part of the display devices 3 can be improved by performing such notification and using a video signal supplied based on the notification.

The controller 1 explained with reference to FIG. 1 to FIG. 4 and the like is also one of the disclosed techniques. The controller 1 supplies the video signal VS to the display chain 30 including the daisy-chained plurality of display devices 3 and configuring at least a part of the tiling display 2. The controller 1 includes the interface unit 11-1 (a first interface unit) connected to the one end 30a of the display chain 30 and for supplying the video signal VS1 (a first video signal) including the video signal of a part of the chain video displayed by the display chain 30 and the interface unit 11-2 (a second interface unit) connected to the other end 30b of the display chain 30 and for supplying the video signal VS2 (a second video signal) including the video signal of the remainder of the chain video. For example, the controller 1 may supply the video signal VS1 to the one end 30a of the display chain 30 and supply the video signal VS2 to the other end 30b of the display chain 30. As explained above, such a controller 1 can also suppress interruption of video display.

As explained with reference to FIG. 10 to FIG. 13 and the like, the controller 1 may receive the notification concerning presence or absence of an abnormality of each of the video signal VS1 and the video signal VS2 from at least one of the display devices 3 included in the display chain 30. Based on the notification, the controller 1 may supply the video signal corresponding to the at least one display device 3 included in the video signal VS1 and the video signal VS2 from at least one of the interface unit 11-1 and the interface unit 11-2. Based on the notification, the controller 1 may specify an abnormality occurrence part in the display chain 30 and, when at least one display device 3 is disposed closer to the one end 30a side of the display chain 30 than the abnormality occurrence part, supply, from the interface unit 11-1, a video signal for at least a part of the display devices 3 disposed closer to the one end 30a side of the display chain 30 than the abnormality occurrence part, the video signal being included in the video signal VS1 and the video signal VS2, and, when the at least one display device 3 is disposed closer to the other end 30b side of the display chain 30 than the abnormality occurrence part, supply, from the interface unit 11-2, a video signal for at least a part of the display devices 3 disposed closer to the other end 30b side of the display chain 30 than the abnormality occurrence part, the video signal being included in the video signal VS1 and the video signal VS2. For example, the quality of a display video of at least a part of the display devices 3 can be improved by receiving such a notification, specifying an abnormality occurrence part based on the notification, and supplying a video signal.

The system 100 explained with reference to FIG. 1 to FIG. 4 and the like is also one of the disclosed techniques. The system 100 includes the controller 1-1 (a first controller) and the controller 1-2 (a second controller) that supply video signals to the display chain 30 including the daisy-chained plurality of display devices 3 and configuring at least a part of the tiling display 2. The controller 1-1 includes the interface unit 11-1 (a first interface unit) connected to the one end 30a of the display chain 30 and for supplying the video signal VS1 (a first video signal) including the video signal of a part of the chain video displayed by the display chain 30. The controller 1-2 (a second controller) includes the interface unit 11-2 (a second interface unit) connected to the other end 30b of the display chain 30 and for supplying the video signal VS2 (a second video signal) including the video signal of the remainder of the chain video to the other end 30b of the display chain 30. As explained above, such a system 100 can also suppress interruption of video display. By making the controllers redundant by the controller 1-1 and the controller 1-2, even when a failure occurs in one of the controllers, it is possible to suppress interruption of video display.

Note that the effects described in the present disclosure are only exemplifications and are not limited by the disclosed content. There may be other effects.

Although the embodiment of the present disclosure is explained above, the technical scope of the present disclosure is not limited to the embodiment explained above per se. Various changes are possible without departing from the gist of the present disclosure. Components in different embodiments and modifications may be combined as appropriate.

Note that the present technique can also take the following configurations.
(1) A display device daisy-chained in a display chain configuring at least a part of a tiling display, the display device comprising:
   a display unit that displays, based on a video signal of a chain video supplied to the display chain and displayed by the display chain, a video corresponding to the own display device in the display chain;
   a first interface unit for acquiring a first video signal including a video signal of a part of the chain video from one end side of the display chain;
   a second interface unit for acquiring a second video signal including a video signal of a remainder of the chain video from another end side of the display chain; and
   a display processing unit that causes the display unit to display the corresponding video based on at least one of the first video signal and the second video signal.
(2) The display device according to (1), wherein
   the display processing unit
   causes the display unit to display a video based on both of the first video signal and the second video signal when there is no abnormality in both of the first video signal and the second video signal, and
   when there is an abnormality in one video signal of the first video signal and the second video signal, causes the display unit to display a video based on another video signal having no abnormality.
(3) The display device according to (2), wherein
   the display processing unit causes, among pixels of the display unit, a pixel, which should display a video based on the one video signal having the abnormality, to display the video based on the other video signal having no abnormality.
(4) The display device according to (2), wherein
   the display processing unit complements, among pixels of the display units, a pixel, which should display a video based on the one video signal having the abnormality, with a pixel value of the other video signal having no abnormality.
(5) The display device according to any one of (1) to (4),
   wherein
   the first video signal includes a video signal of one line of an odd number line and an even number line of the chain video, and
   the second video signal includes a video signal of another line of the odd number line and the even number line of the chain video.
(6) The display device according to any one of (1) to (4),
   wherein
   the first video signal includes a video signal of one column of an odd number column and an even number column of the chain video, and
   the second video signal includes a video signal of another column of the odd number column and the even number column of the chain video.
(7) The display device according to any one of (1) to (4),
   wherein
   the first video signal includes a video signal of one frame of an odd number frame and an even number frame of the chain video, and
   the second video signal includes a video signal of another frame of the odd number frame and the even number frame of the chain video.
(8) The display device according to any one of (1) to (4),
   wherein
   the first video signal includes a video signal of the chain video corresponding to one pixel of a first pixel and a second pixel alternately located in each of a row direction and a column direction of display units of display devices connected in the display chain, and
   the second video signal includes a video signal of the chain video corresponding to another pixel of the first pixel and the second pixel.
(9) The display device according to any one of (1) to (8), further comprising
   a detection circuit that detects presence or absence of abnormality of each of the first video signal and the second video signal based on an error detection code included in each of the first video signal and the second video signal.
(10) The display device according to any one of (1) to (9), further comprising
   a notification unit that notifies, to a controller that supplies the video signal to the display chain, presence or absence of an abnormality of each of the first video signal and the second video signal.
(11) The display device according to (10), wherein
   one of the first interface unit and the second interface unit acquires a video signal corresponding to the own display device included in the first video signal and the second video signal, the video signal being supplied based on the notification from the notification unit, and
   the display processing unit causes the display unit to display the corresponding video based on a video signal corresponding to the own display device.
(12) The display device according to (11), wherein
   when the own display device is disposed closer to the one end side of the display chain than an abnormality occurrence part in the display chain, the first interface unit acquires a video signal corresponding to the own display device included in the first video signal and the second video signal, and
   when the own display device is disposed closer to the other end side of the display chain than the abnormality occurrence part in the display chain, the second interface unit acquires a video signal corresponding to the own display device included in the first video signal and the second video signal.
(13) A controller that supplies a video signal to a display chain including a daisy-chained plurality of display devices and configuring at least a portion of a tiling display, the controller comprising:
   a first interface unit connected to one end of the display chain and for supplying a first video signal including a video signal of a part of a chain video displayed by the display chain; and
   a second interface unit connected to another end of the display chain and for supplying a second video signal including a video signal of a remainder of the chain video.
(14) The controller according to (13), wherein
   the first video signal is supplied to the one end of the display chain and the second video signal is supplied to the other end of the display chain.
(15) The controller according to (13) or (14), wherein
   the first video signal includes a video signal of one line of an odd number line and an even number line of the chain video, and
   the second video signal includes a video signal of another line of the odd number line and the even number line of the chain video.
(16) The controller according to (13) or (14), wherein
   the first video signal includes a video signal of one column of an odd number column and an even number column of the chain video, and
   the second video signal includes a video signal of another column of the odd number column and the even number column of the chain video.
(17) The controller according to (13) or (14), wherein
   the first video signal includes a video signal of one frame of an odd number frame and an even number frame of the chain video, and
   the second video signal includes a video signal of another frame of the odd number frame and the even number frame of the chain video.
(18) The controller according to (13) or (14), wherein
   the first video signal includes a video signal of the chain video corresponding to one pixel of a first pixel and a second pixel alternately located in each of a row direction and a column direction of display units of display devices connected in the display chain, and
   the second video signal includes a video signal of the chain video corresponding to another pixel of the first pixel and the second pixel.
(19) The controller according to any one of (13) to (18),
   wherein
   a notification concerning presence or absence of an abnormality of each of the first video signal and the second video signal is received from at least one of the display devices included in the display chain.
(20) The controller according to (19), wherein
   a video signal corresponding to the at least one display device included in the first video signal and the second video signal is supplied from at least one of the first interface unit and the second interface unit based on the notification.
(21) The controller according to (19) or (20), wherein
   an abnormality occurrence part in the display chain is specified based on the notification,
   when the at least one display device is disposed closer to the one end side of the display chain than the abnormality occurrence part, a video signal for at least a part of display devices disposed closer to the one end side of the display chain than the abnormality occurrence part, the video signal being included in the first video signal and the second video signal, is supplied from the first interface unit, and
   when the at least one display device is disposed closer to the other end side of the display chain than the abnormality occurrence part, a video signal for at least a part of display devices disposed closer to the other end side of the display chain than the abnormality occurrence part, the video signal being included in the first video signal and the second video signal, is supplied from the second interface unit.
(22) A system comprising
   a first controller and a second controller that provide video signals to a display chain including a daisy-chained plurality of display devices and configuring at least a part of a tiling display, wherein
   the first controller includes a first interface unit connected to one end of the display chain and for supplying a first video signal including a video signal of a part of a chain video displayed by the display chain, and
   the second controller includes a second interface unit connected to another end of the display chain and for supplying a second video signal including a video signal of a remainder of the chain video to another end of the display chain.

### Reference Signs List

- 100: SYSTEM

- 1: CONTROLLER
- 2: TILING DISPLAY
- 3: DISPLAY DEVICE
- 30: DISPLAY CHAIN
- 30a: ONE END
- 30b: OTHER END
- 4: INPUT PROCESSING UNIT
- 41: DETECTION UNIT
- 411: ERROR DETECTION CIRCUIT
- 42: NOTIFICATION UNIT
- 5: BUFFER
- 6: DISPLAY PROCESSING UNIT
- 7: DISPLAY UNIT
- IF: INTERFACE UNIT
- VS: VIDEO SIGNAL
- VS1: VIDEO SIGNAL (FIRST VIDEO SIGNAL)
- VS2: VIDEO SIGNAL (SECOND VIDEO SIGNAL)
- EC1: ERROR DETECTION CODE
- EC2: ERROR DETECTION CODE

## Claims

1. A display device daisy-chained in a display chain configuring at least a part of a tiling display, the display device comprising:
a display unit that displays, based on a video signal of a chain video supplied to the display chain and displayed by the display chain, a video corresponding to the own display device in the display chain;
a first interface unit for acquiring a first video signal including a video signal of a part of the chain video from one end side of the display chain;
a second interface unit for acquiring a second video signal including a video signal of a remainder of the chain video from another end side of the display chain; and
a display processing unit that causes the display unit to display the corresponding video based on at least one of the first video signal and the second video signal.

2. The display device according to claim 1, wherein
the display processing unit
causes the display unit to display a video based on both of the first video signal and the second video signal when there is no abnormality in both of the first video signal and the second video signal, and
when there is an abnormality in one video signal of the first video signal and the second video signal, causes the display unit to display a video based on another video signal having no abnormality.

3. The display device according to claim 2, wherein
the display processing unit causes, among pixels of the display unit, a pixel, which should display a video based on the one video signal having the abnormality, to display the video based on the other video signal having no abnormality.

4. The display device according to claim 2, wherein
the display processing unit complements, among pixels of the display units, a pixel, which should display a video based on the one video signal having the abnormality, with a pixel value of the other video signal having no abnormality.

5. The display device according to claim 1, wherein
the first video signal includes a video signal of one line of an odd number line and an even number line of the chain video, and
the second video signal includes a video signal of another line of the odd number line and the even number line of the chain video.

6. The display device according to claim 1, wherein
the first video signal includes a video signal of one column of an odd number column and an even number column of the chain video, and
the second video signal includes a video signal of another column of the odd number column and the even number column of the chain video.

7. The display device according to claim 1, wherein
the first video signal includes a video signal of one frame of an odd number frame and an even number frame of the chain video, and
the second video signal includes a video signal of another frame of the odd number frame and the even number frame of the chain video.

8. The display device according to claim 1, wherein
the first video signal includes a video signal of the chain video corresponding to one pixel of a first pixel and a second pixel alternately located in each of a row direction and a column direction of display units of display devices connected in the display chain, and
the second video signal includes a video signal of the chain video corresponding to another pixel of the first pixel and the second pixel.

9. The display device according to claim 1, further comprising
a detection circuit that detects presence or absence of abnormality of each of the first video signal and the second video signal based on an error detection code included in each of the first video signal and the second video signal.

10. The display device according to claim 1, further comprising
a notification unit that notifies, to a controller that supplies the video signal to the display chain, presence or absence of an abnormality of each of the first video signal and the second video signal.

11. The display device according to claim 10, wherein
one of the first interface unit and the second interface unit acquires a video signal corresponding to the own display device included in the first video signal and the second video signal, the video signal being supplied based on the notification from the notification unit, and
the display processing unit causes the display unit to display the corresponding video based on a video signal corresponding to the own display device.

12. The display device according to claim 11, wherein
when the own display device is disposed closer to the one end side of the display chain than an abnormality occurrence part in the display chain, the first interface unit acquires a video signal corresponding to the own display device included in the first video signal and the second video signal, and
when the own display device is disposed closer to the other end side of the display chain than the abnormality occurrence part in the display chain, the second interface unit acquires a video signal corresponding to the own display device included in the first video signal and the second video signal.

13. A controller that supplies a video signal to a display chain including a daisy-chained plurality of display devices and configuring at least a portion of a tiling display, the controller comprising:
a first interface unit connected to one end of the display chain and for supplying a first video signal including a video signal of a part of a chain video displayed by the display chain; and
a second interface unit connected to another end of the display chain and for supplying a second video signal including a video signal of a remainder of the chain video.

14. The controller according to claim 13, wherein
the first video signal is supplied to the one end of the display chain and the second video signal is supplied to the other end of the display chain.

15. The controller according to claim 13, wherein
the first video signal includes a video signal of one line of an odd number line and an even number line of the chain video, and
the second video signal includes a video signal of another line of the odd number line and the even number line of the chain video.

16. The controller according to claim 13, wherein
the first video signal includes a video signal of one column of an odd number column and an even number column of the chain video, and
the second video signal includes a video signal of another column of the odd number column and the even number column of the chain video.

17. The controller according to claim 13, wherein
the first video signal includes a video signal of one frame of an odd number frame and an even number frame of the chain video, and
the second video signal includes a video signal of another frame of the odd number frame and the even number frame of the chain video.

18. The controller according to claim 13, wherein
the first video signal includes a video signal of the chain video corresponding to one pixel of a first pixel and a second pixel alternately located in each of a row direction and a column direction of display units of display devices connected in the display chain, and
the second video signal includes a video signal of the chain video corresponding to another pixel of the first pixel and the second pixel.

19. The controller according to claim 13, wherein
a notification concerning presence or absence of an abnormality of each of the first video signal and the second video signal is received from at least one of the display devices included in the display chain.

20. The controller according to claim 19, wherein
a video signal corresponding to the at least one display device included in the first video signal and the second video signal is supplied from at least one of the first interface unit and the second interface unit based on the notification.

21. The controller according to claim 19, wherein
an abnormality occurrence part in the display chain is specified based on the notification,
when the at least one display device is disposed closer to the one end side of the display chain than the abnormality occurrence part, a video signal for at least a part of display devices disposed closer to the one end side of the display chain than the abnormality occurrence part, the video signal being included in the first video signal and the second video signal, is supplied from the first interface unit, and
when the at least one display device is disposed closer to the other end side of the display chain than the abnormality occurrence part, a video signal for at least a part of display devices disposed closer to the other end side of the display chain than the abnormality occurrence part, the video signal being included in the first video signal and the second video signal, is supplied from the second interface unit.

22. A system comprising
a first controller and a second controller that provide video signals to a display chain including a daisy-chained plurality of display devices and configuring at least a part of a tiling display, wherein
the first controller includes a first interface unit connected to one end of the display chain and for supplying a first video signal including a video signal of a part of a chain video displayed by the display chain, and
the second controller includes a second interface unit connected to another end of the display chain and for supplying a second video signal including a video signal of a remainder of the chain video to another end of the display chain.
